# EUROPEAN PATENT APPLICATION

(11) **EP 2 792 582 A1**
(43) Date of publication of application: **22.10.2014**
(21) Application number: 12857347.4
(22) Date of filing: 17.07.2012
(51) Int. Cl.: B62H 3/00, B62H 3/08, E04H 6/12

(54) **BICYCLE RACK FOR BICYCLE PARKING TOWER, AND BICYCLE PARKING TOWER EQUIPPED WITH SAME**

(30) Priority: 15.12.2011 KR 20110135581
(71) Applicant: Dongseohightec Co. Ltd, Ulsan 681-802 (KR)
(72) Inventor: KIM, Kwang-Jae, Busan 616-760 (KR)
(74) Representative: HOFFMANN EITLE
(86) International application number: PCT/KR2012/005707
(87) International publication number: WO 2013/089331

(57) **Abstract**

The present invention relates to a bicycle stay for a bicycle parking tower and a bicycle parking tower equipped with the bicycle stay. The present invention provides a bicycle stay that includes: a support bar for being held on a pair of chain belts that are circulated by a driving motor at a predetermined position in a parking tower; a body of which the upper portion is rotatably fitted on the support bar and which has a crosspiece at the lower portion; fixing mechanisms that are fitted on the support bar and positioned at both sides of the upper portion of the body; and a locking mechanism that is slidably disposed at a longitudinal predetermined position of the body, and a bicycle parking tower equipped with the bicycle stay.

## Description

### BACKGROUND OF THE INVENTION

### TECHNICAL FIELD

The present invention relates to a bicycle stay for a bicycle parking tower and a bicycle parking tower equipped with the same, and more particularly, to a bicycle stay for a bicycle parking tower which is disposed on a chain belt circulating in a bicycle parking tower, where bicycles are parked, to park a bicycle, and a bicycle parking tower equipped with the bicycle stay.

### BACKGROUND ART

Recently, bicycles are increasingly being used to move short distances because traffic congestion and environmental pollution have become worse due to an increase of vehicles. The bicycle, which is a kind of transportation good for the health of users without a concern of environmental pollution due to moving, can enable individuals to move fast when street spaces can be efficiently used and even if streets are congested.

Accordingly, the government and civic groups actively encourage daily use of bicycles, and as a part of these policies, bike path networks have been increased throughout the country and a policy for increasing convenience in using bicycles, for example, constructing bicycle parking lots where bicycles can be safely parked and kept at stations and terminals, is in operation.

The existing bicycle parking facilities provide only a parking space in a structure with a roof or are composed of stays where bicycles can be fixed with the front wheel lifted.

However, the existing bicycle parking facilities have a problem of a risk of theft of parked bicycles, a narrow parking space, and corrosion and damage of bicycles due to rain and wind.

As such, bicycle parking towers have been provided so that bicycles can be parked indoors, in order to solve the problem in the related art.

These bicycle parking towers include a circular or polygonal main structure, a pair of chain belts disposed with a predetermined gap therebetween and circulating inside the main structure, and stays with one end and the other end coupled to the pair of chain belts.

However, there is a problem in the existing bicycle parking towers in that since the handle and the frame of a bicycle are locked by the locking mechanism of the stay, when the stay turns while circulating with the chain belt, it shakes, and because of this the bicycle may be separated and dropped from the stay due to the shaking transmitted from the stay and the chain belt may be damaged by an increase in fatigue load on the chain belt due to the shaking of the stay.

Further, there is another problem in that when it rains with bicycles parked, the bicycles at lower positions become dirty due to rainwater and dirt dropping from the bicycles at higher positions.

Further, there is another problem in that the sizes of the bicycle stays in the existing bicycle parking towers are fixed, so it is impossible to hold various types of bicycles from juvenile bicycles to adult bicycles.

### DISCLOSURE

### TECHNICAL PROBLEM

In order to solve the problems, an object of the present invention is to provide a bicycle stay for a bicycle parking tower which can prevent fatigue failure of a chain belt by reducing a fatigue load on the chain belt by minimizing shaking of a stay, when the stay turns while circulating with the chain belt inside a bicycle parking tower, and can prevent a bicycle from being separated and dropped from the stay due to shaking of the stay when the stay turns.

Another object of the present invention is to provide a bicycle stay for a bicycle parking tower which can prevent a bicycle parked at a lower position from getting dirty by rainwater and dirt dropping from a bicycle parked at a higher position in a parking tower when it rains, and a bicycle parking tower equipped with the bicycle stay.

Another object of the present invention is to provide a bicycle stay for a bicycle parking tower which can hold various types of bicycles, and a bicycle parking tower equipped with the bicycle stay.

Another object of the present invention is to provide a bicycle parking tower that can prevent a risk of theft of parked bicycles and corrosion and damage of bicycles due to rain and wind, as well as solving the problem of a narrow parking space.

Another object of the present invention is to provide a bicycle parking tower that can prevent a risk of the falling of the bicycles that have been parked, when a machine for moving the bicycles up/down is operated at the entrance to park a bicycle.

### TECHNICAL SOLUTION

In order to achieve the objects described above and other objects of the present invention, according to an embodiment of the present invention, there is provided a bicycle stay for a bicycle parking tower, which includes: a support bar for being held respectively on a pair of chain belts that are circulated by a driving motor in a bicycle parking tower; a body of which the upper portion is rotatably fitted on the support bar and which has a crosspiece at the lower portion; fixing mechanisms that are fitted on the support bar and positioned at both sides of the upper portion of the body; and a locking mechanism that is slidably disposed at a longitudinal predetermined position of the body.

According to another embodiment of the present invention, there is provided a bicycle parking tower which is constructed at one side of a building in which bicycles are parked, and which includes: a pair of support frames that protrude to a predetermined distance outward from one side of the top of the building and are fixed facing each other; sub-support frames that are coupled to the inside of the support frames with a predetermined gap therebetween, perpendicular to the support frames; a pair of chain belts that are wound around two pairs of pulleys rotatably mounted on the upper portion of the sub-support frames and facing each other symmetrically with a predetermined gap therebetween and circulate to move up/down; a lower frame that has a shape corresponding to the shape of the support frames and is fixed to the ground at a predetermined height; a parking lot entrance that communicates with the inside of the lower frame; lower sub-frames that are coupled at predetermined positions to face each other symmetrically with a predetermined gap therebetween and on which pulleys are disposed to be connected with the chain belts; a pulley shaft that is combined with the lower frame perpendicularly to the lower sub-frames, under the lower sub-frames; a driving motor that is connected to the pulley shaft to transmit torque; and a plurality of bicycle stays that are arranged with a predetermined gap therebetween longitudinally on the chain belts, in which the bicycle stay includes a support bar of which one end and the other end are coupled to the pair of chain belts, respectively, a body of which the upper portion is rotatably fitted on the support bar and has a crosspiece at the lower portion, fixing mechanisms fitted on the support bar and positioned at both sides of the upper portion of the body, and a locking mechanism slidably disposed at a predetermined longitudinal position of the body.

### ADVANTAGEOUS EFFECT

According to an embodiment of the present invention, it is possible to prevent fatigue failure of chain belts by reducing a fatigue load on the chain belts by minimizing shaking of bicycle stays when the bicycle stays circulated with the chain belts inside a bicycle parking tower turn, and it is also possible to prevent bicycles from being separated and dropped from the stays due to shaking of the bicycle stays when turning.

Further, when it rains while bicycles are parked, it is possible to prevent the bicycles parked at lower positions from getting dirty due to rainwater and dust dropping from the bicycles parked at higher positions.

Further, it is possible to hold various types of bicycles.

Further, it is possible to prevent a risk of theft of parked bicycles and corrosion and damage of bicycles due to rain and wind, and solve the problem of a narrow parking space.

Further, it is possible to prevent a risk of the falling of the bicycles that have been parked, when a machine for moving bicycles up/down is operated at the entrance in order to park a bicycle.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a perspective view schematically showing a bicycle parking tower equipped with a bicycle stay for a bicycle parking tower according to an embodiment of the present invention,
Fig. 2 is a perspective view of a bicycle stay for a bicycle parking tower according to an embodiment of the present invention,
Fig. 3 is an exploded perspective view of a bicycle stay for a bicycle parking tower according to an embodiment of the present invention,
Fig. 4 is an enlarged view showing the main parts to illustrate the operation of the locking mechanism shown in Fig. 2,
Fig. 5 is a view schematically showing the inside of the lower part of a bicycle parking tower according to another embodiment of the present invention,
Fig. 6 is a view schematically showing the inside of a bicycle parking tower with the outer door closed, according to another embodiment of the present invention, and
Fig. 7 is a view schematically showing the inside of a bicycle parking tower with the outer door open, according to another embodiment of the present invention.

### Preferred Embodiments of the Invention

Hereinafter, preferred embodiments of the present invention are described in detail with reference to the accompanying drawings. The thicknesses of lines or sizes of components illustrated in the drawings may be exaggerated for clarity and convenience of the following description.

Further, the terminologies described below are terminologies determined in consideration of the functions in the present invention and may be construed in different ways by the intention of users and operators or the custom. Therefore, the definitions of the terminologies should be construed on the basis of the contents throughout the specification.

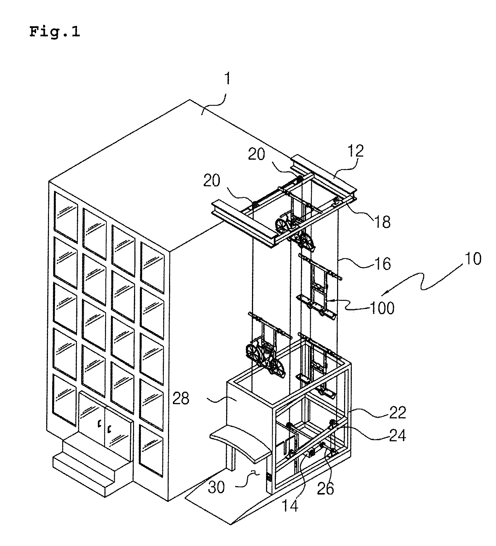

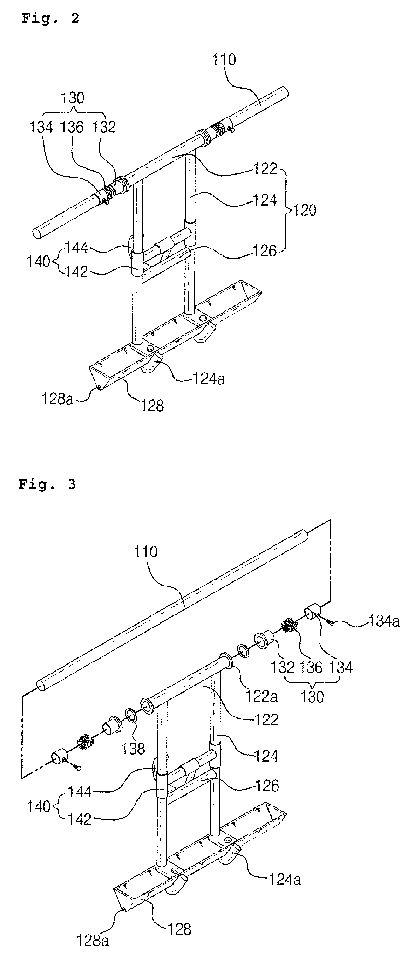

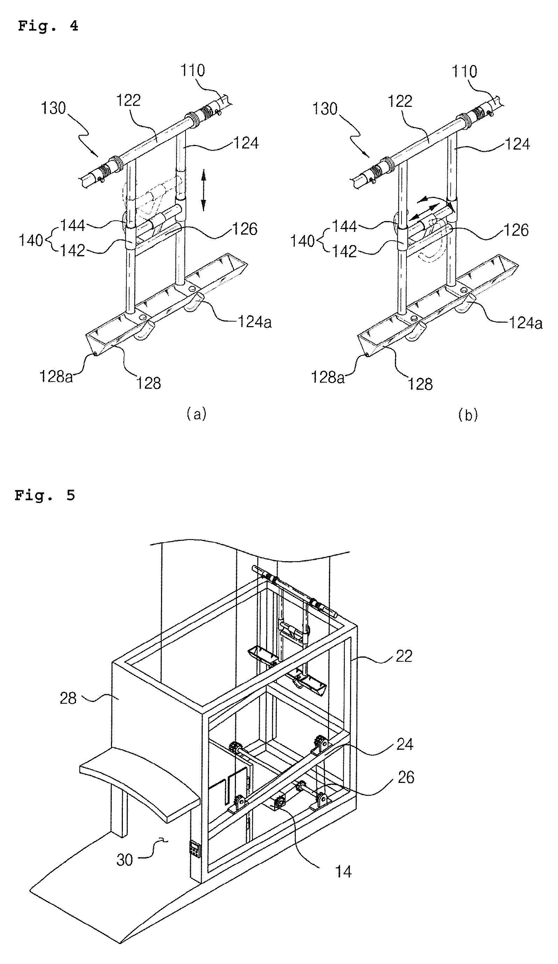

Fig. 1 is a perspective view schematically showing a bicycle parking tower equipped with bicycle stay for a bicycle parking tower according to an embodiment of the present invention, Fig. 2 is a perspective view of a bicycle stay for a bicycle parking tower according to an embodiment of the present invention, Fig. 3 is an exploded perspective view of a bicycle stay for a bicycle parking tower according to an embodiment of the present invention, and Fig. 4 is an enlarged view showing the main parts to illustrate the operation of the locking mechanism shown in Fig. 2.

Referring to Figs. 1 to 4, a bicycle stay 100 according to an embodiment of the present invention includes a support bar 110, a body 120, fixing mechanisms 130, and a locking mechanism 140.

The support bar 110 is a circular bar and of which one end and the other end are coupled respectively to a pair of chain belts 16 circulated by a driving motor 14 in a parking tower 10.

A plurality of support bars 110 are arranged with a predetermined gap therebetween longitudinally on the chain belt 16.

The body 120 is composed of a horizontal frame 122 having a flange 122a at both ends and rotatably fitted on the support bar 110, a pair of vertical frames 124 connected to predetermined positions on the horizontal frame 122 with a predetermined gap therebetween, and a connecting frame 126 connected to predetermined longitudinal positions of the pair of vertical frames 124.

It is preferable that an L-shaped bending portion 124a is formed at one end of each of the vertical frames 124, and a crosspiece 128 is mounted on the bending portions 124a.

The crosspiece 128 is mounted on the bending portion 124a formed at one end of the vertical frames 124 and is formed in a V-shaped so that the wheels of a bicycle can be held. At least one drain hole 128a is longitudinally formed at a predetermined position on the bottom of the crosspiece 128, and is preferably formed at the edges of both sides of the crosspiece 128.

That is, the drain hole is provided to prevent the bicycle parked at a lower position from getting dirty due to rainwater or dust dropping from the bicycle parked at a higher position.

The fixing mechanisms 130 are fitted on the support bar 110 and fix the position of the body 120 in contact with both sides of the upper portion of the body 120, that is, the flanges 122a formed at both ends of the horizontal frame 122 to reduce shaking, which is generated when the body 120 turns with the chain belt 16 circulating, and a shock due to the shaking.

The fixing mechanisms 130 are composed of a pair of stoppers 132 fitted on the support bar 110 from both ends of the support bar 110, with one end of each stopper in contact with each side of the upper portion of the body 120, that is, one end of the flanges 122a formed at both ends of the horizontal frame 122, fixing members 134 disposed at the other ends of the stoppers 132 to fix the position of the stopper 132, and elastic members 136 disposed between the stoppers 132 and the fixing members 134 and absorbing a shock due to shaking that is generated when the body 120 turns.

Fixing bolts 134a that fasten and fix the fixing members 134 at predetermined positions on the support bar 110 are disposed at predetermined positions of the fixing members 134.

Friction members 138 are disposed between both sides of the upper portion of the body 120, that is, the flanges 122a of the horizontal frame 122 and the pair of stoppers 132, respectively, and they generate friction force to prevent excessive shaking of the body 120 when turning.

The locking mechanism 140 is slidably disposed at a predetermined longitudinal position of the body 120 and fixes the body of the bicycle with the wheels held on the crosspiece 128.

The locking mechanism 140 is composed of a body 142 slidably coupled at a predetermined longitudinal position of the body 120 and a hook 144 rotatably coupled to the body 142 and fixing the body of a bicycle.

Further, it is preferable that the hook 144 is coupled to the body 142 and can slide longitudinally on the body 142.

That is, the locking mechanism 140 is coupled to the body 120 such that the body 142 can slide longitudinally on the body 120 and the hook 144 can turn around and slide on the body 142, so that it is possible to fix various sizes of bicycles.

Therefore, according to the bicycle stay for a bicycle parking tower of an embodiment of the present invention, it is possible to prevent fatigue failure of the chain belt 16 by reducing a fatigue load on the chain belt 16 by minimizing the shaking of the bicycle stay 100 which is generated when turning of the bicycle stay 100 circulated with the chain belt 16 in the bicycle parking tower, and to prevent a bicycle from being separated and dropped from the bicycle stay 100 due to the shaking of the bicycle stay 100 when the bicycle stay 100 turns.

Further, when it rains while a bicycle is parked at the bicycle parking tower, rainwater or dust is prevented from dropping from the bicycle parked at a higher position by the crosspiece 128, so it is possible to prevent the bicycle parked at a lower position from becoming dirty.

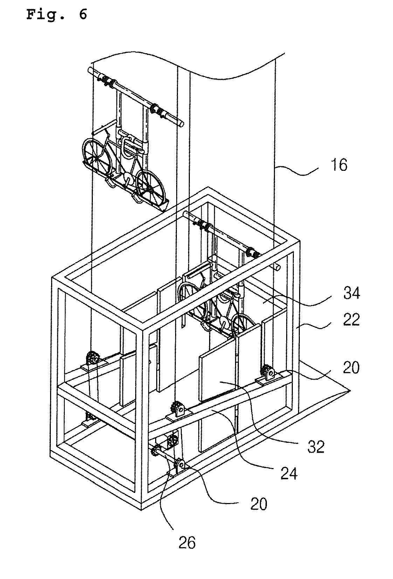

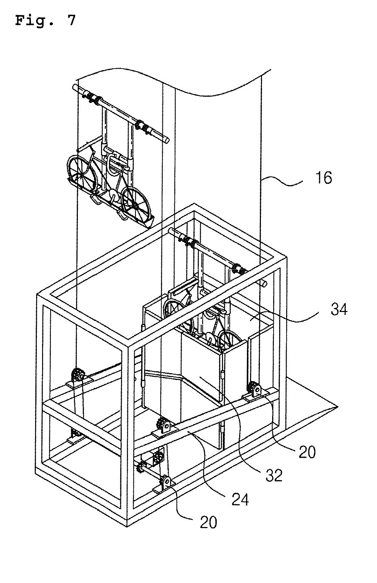

Fig. 5 is a view schematically showing the inside of the lower part of a bicycle parking tower according to another embodiment of the present invention, Fig. 6 is a view schematically showing the inside of a bicycle parking tower with the outer door closed, according to another embodiment of the present invention, and Fig. 7 is a view schematically showing the inside of a bicycle parking tower with the outer door open, according to another embodiment of the present invention.

Referring to Figs. 5 to 7, the present invention provides a bicycle parking tower 10 that is constructed at one side of a building 1 and in which bicycles are parked. The bicycle parking tower 10 includes: a pair of support frames 12 that protrude to a predetermined distance outward from one side of the top of the building 1 and are fixed facing each other; sub-support frames 18 that are coupled to the inside of the pair of support frames 12 with a predetermined gap therebetween, perpendicular to the pair of support frames 12; a pair of chain belts 16 that are wound around two pairs of pulleys 20 rotatably mounted on the upper portion of the sub-support frames 18 and facing each other with a predetermined gap therebetween and circulate to move up/down; a lower frame 22 that has a rectangular cross-section corresponding to the shape of the pair of support frames 12 and is fixed to the ground at a predetermined height; a parking lot entrance 30 that communicates with the inside of the lower frame 22; lower sub-frames 24 that are coupled at predetermined positions of the lower frame 22 to face each other symmetrically with a predetermined gap therebetween and on which pulleys 20 are disposed to be connected with the chain belts 16; a pulley shaft 26 that is combined with the lower frame 22 perpendicularly to the lower sub-frames 24, under the lower sub-frames 24; a driving motor 14 that is connected to the pulley shaft 26 to transmit torque; and a plurality of bicycle stays 100 that are arranged with a predetermined gap therebetween longitudinally on the chain belts 16, in which the bicycle stay 100 includes a support bar 110 of which one end and the other end are coupled to the pair of chain belts 16, respectively, a body 120 of which the upper portion is rotatably fitted on the support bar 110 and has a crosspiece 128 at the lower portion, fixing mechanisms 130 fitted on the support bar 110 and positioned at both sides of the upper portion of the body 120, and a locking mechanism 140 slidably disposed at a predetermined longitudinal position of the body 120.

The support frames 12 protrude to a predetermined distance outward from one side of the top of the building with a pair facing each other. As the support frames 12, angles or H beams with one side open are generally used.

Both ends of the sub-support frames 18 are coupled in pairs to the inside of the support frames 12 with a predetermined gap therebetween and the pulleys 20 are mounted on the upper portion of the sub-support frames 18 with a predetermined gap therebetween. The pulleys 20 face each other to correspond to each other on the upper portion of the sub-support frames 18.

A pair of chain belts 16 is wound on the two pairs of pulleys 20, respectively, which are symmetrically and rotatably disposed with a predetermine gap therebetween on the upper portion of the sub-support frames 18 to face each other and move up/down by circulating.

Further, the chain belts 16 are provided in a pair with a predetermined gap therebetween in the shape of a ladder and wound on the two pairs of pulleys 20, respectively disposed on the sub-support frames 18 arranged at the top of the bicycle parking tower 10 and of which the lower parts are wound on the two pairs of pulley 20, respectively, disposed on the upper portion of a pair of lower sub-frames 24 facing each other, which are described below, to move up/down by circulating.

The bicycle stays 100 are arranged with a predetermined gap therebetween longitudinally on the chain belts 16.

The detailed description of the bicycle stays 100 were given above, and therefore it is not provided again.

The lower frame 22 is disposed at a predetermined height to correspond to the support frames 12 and has a rectangular cross-section.

The protrusion length of the support frames 12 and the length of the lower frame 22 correspond to each other and it is possible to achieve a closed bicycle parking space by disposing a cover 28 around the support frames 12 and the lower frame 22.

The parking lot entrance 30 communicates with the inside of the lower frame 22, protrudes to a predetermined distance from a side of the lower frame 22, and has a roof at a predetermined height from the ground.

The parking lot entrance 30 is composed of an outer door (not shown) that is provided to block the outside, an inner door 32 that is provided to block the inside where a bicycle is parked, and a upper door 34 that is provided for safety, in which the outer door operates with the upper door 34 in the same way, while the inner door 32 operates inversely with the outer door.

The lower-sub frames 24 are coupled to predetermined positions of the lower frame 22 to symmetrically face each other with a predetermined gap therebetween, and on which the pulleys 20 are disposed to be connected with the chain belts 16.

It is preferable that the lower sub-frames 24 are coupled to predetermined positions of the lower frame 22 so that a bicycle that is parked and then moved does not come in contact with the floor, and are inclined at a predetermined angle with respect to the lower frame 22 so that a space where a driving device such as the driving motor 14 can be installed is formed under the lower sub-frames.

The pulley shaft 26 is combined with the lower frame 22 under the lower-sub frames 24, perpendicular to the lower-sub frames 24, both ends of the pulley shaft 26 are coupled to the lower portion of the lower frame 22, and pulleys 20 are coupled to the both ends.

Further, one pulley 20 is further fitted on a predetermined position of the pulley shaft 26.

The motor 14 is connected to the pulley shaft 26 through a chain, so the torque of the motor 14 is transmitted. It is preferable that the motor 14 is fixed to the ground.

The operation principle of the bicycle parking tower according to an embodiment of the present invention is described in detail with reference to the drawings.

As a user opens the outer door at the parking lot entrance 30 to park a bicycle, the inner door 32 closes and the upper door 24 opens upward.

The upper door 34 open upward protects the user by blocking the bicycles, which are parked over it and may drop, when the user mounts a bicycle onto the bicycle stay 100 to park it.

When the bicycle stay 10 held on the chain belt 16 is positioned on the front side of the inner door 32, the user fixes the bicycle to the bicycle stay 100.

When the bicycle is fixed to the bicycle stay 100, the driving motor 14 on the ground starts to operate, the rotation by the operation of the driving motor 14 is transmitted to the pulley 20 disposed at a predetermined position of the pulley shaft 26, and the torque of the driving motor 14 is transmitted to the pulley shaft 26, so the pulleys 20 at both ends of the pulley shaft 26 rotate accordingly.

As the pulleys 20 disposed at both ends of the pulley shaft 26 rotate, torque is transmitted to the pulleys 20 disposed on the upper portion of the lower sub-frames 24 and the chain belts 16 turn, in which another bicycle stay 100 held on the chain belts 16 is moved to the front side of the inner door 32, so another bicycle can be continuously fixed to the bicycle stay 100.

When the outer door of the parking lot entrance 30 is closed after a bicycle is parked, the inner door 32 operates inversely with the outer door, so the inner door 32 opens, while the upper door 34 operates with the outer door in the same way, so the upper door 34 closes.

In the bicycle parking tower according to an embodiment of the present invention, since the support frames 12 and the lower frame 22 are disposed at a side of a building and covered by the cover 28, it is possible to provide a bicycle parking tower that can prevent a risk of theft of parked bicycles and corrosion and damage of bicycles due to rain and wind, and can solve the problem of a narrow parking space.

Further, it is possible to provide the bicycle parking tower 20 designed to decrease the space for the bicycle parking tower 20 and reduce the cost for constructing the bicycle parking tower 20, by constructing the bicycle parking tower 20 at a side of the building 10.

Further, the upper door that is vertically closed opens upward, when a user opens the outer door of the parking lot entrance, in order to be able to prevent a risk of the falling of parked bicycles moved up/down by a machine that is operated at the entrance to park a bicycle, so it is possible to provide the bicycle parking tower 20 that can protect a user from a falling of a bicycle parked over the user.

Although preferred embodiments of the present invention were described above with reference to the accompanying drawings, it should be understood that the present invention may be changed and modified in various ways by those skilled in the art without departing from the spirit of the present invention described in the following claims.

### INDUSTRIAL APPLICABILITY

The present invention relates to a bicycle stay for a bicycle parking tower and a bicycle parking tower equipped with the same, and more particularly, it can be applied to a bicycle stay for a bicycle parking tower which is disposed on a chain belt circulating in a bicycle parking tower, where bicycles are parked, to park a bicycle, and a bicycle parking tower equipped with the bicycle stay.

## Claims

1. A bicycle stay for a bicycle parking tower, comprising:
a support bar for being held on a pair of chain belts that are circulated by a driving motor in a bicycle parking tower, with one end and the other end coupled to the pair of chain belts, respectively;
a body of which the upper portion is rotatably fitted on the support bar and which has a crosspiece at the lower portion;
fixing mechanisms that are fitted on the support bar and positioned at both sides of the upper portion of the body; and
a locking mechanism that is slidably disposed at a longitudinal predetermined position of the body.

2. The bicycle stay of claim 1, wherein the fixing mechanisms include:
a pair of stoppers fitted on the support bar from both ends of the support bar, with one end of each stopper in contact with each side of the upper portion of the body;
fixing members disposed at the other ends of the stoppers to fix the position of the stopper; and
elastic members disposed between the stoppers and the fixing members.

3. The bicycle stay of claim 2, wherein a friction member is disposed between both sides of the upper portion of the body and the pair of stoppers.

4. The bicycle stay of claim 1, wherein the locking member has a body slidably fitted on a predetermined longitudinal position of the body and a hook rotatably coupled to the body.

5. The bicycle stay of claim 1, wherein at least one or more drain holes are formed at predetermined positions on the bottom of the crosspiece.

6. A bicycle parking tower that is constructed at one side of a building and in which bicycles are parked, the bicycle parking tower comprising:
a pair of support frames that protrude to a predetermined distance outward from one side of the top of the building and are fixed facing each other;
sub-support frames that are coupled to the inside of the support frames with a predetermined gap therebetween, perpendicular to the support frames;
a pair of chain belts that are wound around two pairs of pulleys rotatably mounted on the upper portion of the sub frames and facing each other symmetrically with a predetermined gap therebetween and circulate to move up/down;
a lower frame that has a shape corresponding to the shape of the pair of support frames and is fixed to the ground at a predetermined height;
a parking lot entrance that communicates with the inside of the lower frame;
lower sub-frames that are coupled at predetermined positions to face each other symmetrically with a predetermined gap therebetween and on which pulleys are disposed to be connected with the chain belts;
a pulley shaft that is combined with the lower frame perpendicularly to the lower sub-frames, under the lower sub-frames;
a driving motor that is connected to the pulley shaft to transmit torque; and
a plurality of bicycle stays that is arranged with a predetermined gap therebetween longitudinally on the chain belts,
wherein the bicycle stay includes a support bar of which one end and the other end are coupled to the pair of chain belts, a body of which the upper portion is rotatably fitted on the support bar and has a crosspiece at the lower portion, fixing mechanisms fitted on the support bar and positioned at both sides of the upper portion of the body, and a locking mechanism slidably disposed at a predetermined longitudinal position of the body.

7. The bicycle parking tower of claim 6, wherein the parking lot entrance is composed of an outer door that blocks the outside, an inner door that blocks the inner side where a bicycle is parked, and an upper door that is provided for safety, and
the outer door operates with the upper door in the same way and the inner door operates inversely with the outer door.

8. The bicycle parking tower of claim 6, wherein the fixing mechanism includes:
a pair of stoppers fitted on the support bar from both ends of the support bar, with one end in contact with both sides of the upper portion of the body;
fixing members disposed at the other ends of the stoppers to fix the position of the stopper; and
elastic members disposed between the stoppers and the fixing members, and
a friction member is disposed between both sides of the upper portion of the body and the pair of stoppers.

9. The bicycle parking tower of claim 6, wherein the locking member has a body slidably fitted on a predetermined longitudinal position of the body and a hook rotatably coupled to the body.
